# EUROPÄISCHE PATENTSCHRIFT

(11) **EP 2 315 946 B1**
(45) Veröffentlichungstag und Bekanntmachung des Hinweises auf die Patenterteilung: **28.09.2016**
(21) Anmeldenummer: 09781703.5
(22) Anmeldetag: 11.08.2009
(51) Int. Cl.: F04D 13/06, F04D 29/048, F04D 25/06, F04D 29/058, F04D 29/58

(54) **FLUIDENERGIEMASCHINE**
FLUID ENERGY MACHINE
MACHINE À ÉNERGIE HYDRAULIQUE OU PNEUMATIQUE

(30) Priorität: 13.08.2008 DE 102008038787
(43) Veröffentlichungstag der Anmeldung: 04.05.2011
(73) Patentinhaber: Siemens Aktiengesellschaft, 80333 München (DE)
(72) Erfinder: WAGNER, Norbert, 46244 Bottrop (DE)
(86) Internationale Anmeldenummer: PCT/EP2009/060383
(87) Internationale Veröffentlichungsnummer: WO 2010/018171

(56) Entgegenhaltungen:
- EP-A- 0 990 798
- WO-A-97/08808
- DE-C1- 3 729 486
- US-A1- 2007 110 595
- US-A1- 2007 110 596
- US-B1- 6 218 749

## Beschreibung

Die Erfindung betrifft eine Fluidenergiemaschine, insbesondere Verdichter oder Pumpe, mit einem Gehäuse, einem Motor, mindestens einem Laufrad, mindestens zwei radialen Lagern, mindestens einer sich entlang einer Wellenlängsachse erstreckenden Welle, die das mindestens eine Laufrad und einen Rotor des Motors trägt, wobei die Welle in den radialen Lagern gelagert ist, wobei der Motor einen den Rotor im Bereich des Motors zumindest teilweise umgebenden Stator aufweist und zwischen dem Rotor und dem Stator sowie zwischen dem Rotor und den radialen Lagern ein sich in Umfangsrichtung und entlang der Wellenlängsachse erstreckender Spalt ausgebildet ist, der mit einem Fluid zumindest teilweise gefüllt ist.

Derartige Fluidenergiemaschinen sind Objekt besonders intensiver aktueller Forschungsbemühungen, weil sie die Möglichkeit einer dichtungsfreien Ausführung bieten. Der Motor, der in der Regel als elektrischer Antrieb ausgebildet ist und das Laufrad der Fluidenergiemaschine, z.B. ein Verdichterlaufrad, können gemeinsam in einem einzigen Gehäuse gasdicht von der Umgebung abgeschlossen angeordnet sein, so dass die Welle keine Durchführung nach außen benötigt. Dichtungsfrei bedeutet in diesem Zusammenhang, dass keine Wellendichtung einen Spalt zwischen einem bewegten Bauteil und einem stehenden Bauteil zur Umgebung hin abdichten muss. Etwaige Dichtungen, zum Beispiel im Bereich der Laufräder werden dennoch benötigt und regelmäßig als Labyrinthdichtungen ausgeführt. Der Rotor und der Stator des Motors von dem Prozessfluid umgeben, da auch in dem Gehäuse bevorzugt zwischen dem Verdichter und dem Motor keine Wellendichtung vorgesehen ist. Dementsprechend befindet sich in den Spalten zwischen dem Rotor und den stehenden Bauteilen - also zwischen dem Stator des Motors und dem Rotor, in den Lagern und Fanglagern - das Prozessfluid. Erfährt der Rotor oder das Spaltrohr eine Schwingungsanregung, die die Spalthöhe in einem der umlaufenden Spalte an einer Umfangsposition verändert und weist das Fluid in dem Spalt zwischen dem Rotor und dem Spaltrohr eine nennenswerte Umfangsgeschwindigkeit auf, so hat die lokale Reduktion der Spalthöhe in der sich ausbildenden Couette-Strömung eine Beschleunigung zur Folge, die nach dem Strömungsgesetz von Bernoulli zu einer lokalen Druckerniedrigung führt, so dass zusätzlich zu der angeregten Reduktion der Spalthöhe eine Verstärkung der die Spalthöhe reduzierenden Kräfte eintritt. Diese aero- bzw. hydrodynamischen Kräfte wachsen mit zunehmender Fluiddichte und können bei hinreichender Ausprägung zu einem Kontakt zwischen rotierenden und stehenden Teilen führen und sogar Beschädigungen zur Folge haben. Eine derartige Reduzierung der Verfügbarkeit der Fluidenergiemaschine ist unbedingt zu verhindern.

Aus der WO 97/08808 ist bereits ein Spaltrohrmotor bekannt, der mindestens einen lagerlosen Motor aufweist und einen seitlich angeordneten Impeller einer Pumpe antreibt. Die dort vorgestellte Anordnung ist nur für den Betrieb kleiner Fluidenergiemaschinen geeignet, da das an einem freien Wellenende jeweils angeordnete Laufrad rotordynamisch hinsichtlich Größe und Masse beschränkt ist. Eine mehrstufige Ausbildung ist in der beschriebenen Weise nicht denkbar. Eine hydrodynamische Instabilität in der Spaltströmung ist nicht problematisiert.

Aus der EP 0 990 798 A ist bereits eine Fluidenergiemaschine gemäß dem Oberbegriff des Anspruchs 1 bekannt, welche mittels einer Verbesserung der Rotordynamik effizienter betrieben werden könnte.

Ausgehend von den vorbeschriebenen Problemen hat es sich die Erfindung zur Aufgabe gemacht, eine Fluidenergiemaschine der eingangs genannten Art zu schaffen, die eine besonders hohe Verfügbarkeit aufweist, wobei insbesondere die Betriebssicherheit bei einer großen Fluidenergiemaschine verbessert werden soll.

Die Erfindung löst die Aufgabe mittels der im Anspruch 1 zusätzlich aufgeführten Merkmale. Die rückbezogenen

Unteransprüche beinhalten vorteilhafte Weiterbildungen der Erfindung.

Unter einem Laufrad ist nach der Erfindung ein rotierendes Bauteil zu verstehen, welches ein Prozessfluid dem Bestimmungszweck der Maschine gemäß fördert oder von diesem angetrieben wird. Dies wäre beispielsweise ein Impeller eines Verdichters. Bei einem Kreiselverdichter können entsprechend beispielsweise mehrere Zentrifugallaufräder In-line oder Back-to-Back angeordnet sein. Das zusätzliche Aufbringen von Kräften auf den Rotor des Motors mittels gesonderter Magnetfelder, die von dem Stator gesteuert von der Regelung erzeugt werden, sorgt für eine sicherere Lage des Rotors und ein erhöhtes Maß an Konzentrizität der Wellenlängsachse zu dem Spaltrohr. Dementsprechend kommt es nicht so früh zu dem oben beschriebenen rotordynamischen und strömungstechnischen Phänomen der hydrodynamischen Instabilität bzw. es kann ein weiterer Betriebsbereich ohne Risiko genutzt werden.

Besonders zweckmäßig ist das Gehäuse gasdicht ausgebildet, wobei wenigstens ein Einlass und ein Auslass für das von der Fluidenergiemaschine zu fördernde oder das antreibende Prozessfluid vorgesehen sind. In diesem Sinne versteht die Erfindung unter einem gasdichten Gehäuse, dass keine Wellendichtung für Herausführungen der Welle aus dem Gehäuse vorgesehen werden muss.

Erfindungsgemäß ist wenigstens ein Axiallager zur definierten Lagerung der Welle in einer axialen Lage vorgesehen. Dieses Axiallager ist bevorzugt als Magnetlager ausgebildet, ebenso wie die mindestens zwei gesonderten radialen Lager.

Das Einsparen einer aufwendigen Wellendichtung bringt natürlich den Nachteil mit sich, dass der Motor für eine Exposition gegenüber dem häufig chemisch aggressiven Prozessfluid unempfindlich sein muss. Das Prozessfluid kann hierbei beispielsweise Erdgas sein, das unterseeisch verdichtet wird und neben der chemischen Aggressivität auch noch die Schwierigkeiten eines stark schwankenden Drucks und grober Verunreinigungen mit sich bringt.

Hierbei ist es zweckmäßig zumindest das Innere des Stators des Motors vor dem Prozessfluid zu schützen, so dass ein sogenanntes Spaltrohr in dem Spalt zwischen dem Rotor und dem Stator vorgesehen werden kann, welches einen Raum, in dem der Rotor von dem Prozessfluid umspült wird, trennt von einem Raum, in dem das Innere des Stators angeordnet ist.

Der Stator ist hierbei vorteilhaft von einem separaten Kühlsystem mittels eines Kühlungsfluids auf einer geeigneten Betriebstemperatur gehalten, wobei die Kühlung der übrigen Komponenten der Maschine bevorzugt mittels des Prozessfluids erfolgt. Insbesondere können die Lager, die vorzugsweise als Magnetlager ausgebildet sind, mittels des Prozessfluids gekühlt sein.

An das Spaltrohr werden hierbei besondere Anforderungen gestellt. Damit es sich nicht zu stark erwärmt, aufgrund induzierter Wirbelströme in den wechselnden magnetischen Feldern des Stators, sollte es nicht elektrisch leitend sein. Daneben muss es eine hinreichende mechanische Stabilität besitzen, da sich hohe Differenzdrücke zwischen dem Prozessfluid und dem mittels des Spaltrohrs in der Regel von dem Prozessfluid getrennten Kühlungsfluid des Stators ergeben können. Für einen akzeptablen Wirkungsgrad darf die Wandstärke des Spaltrohrs nicht übermäßig dick ausgebildet sein. Das Spaltrohr muss darüber hinaus gegenüber dem Prozessfluid chemisch beständig sein.

In einer anderen bevorzugten Weiterbildung der Erfindung werden Komponenten der Fluidenergiemaschine mittels des zu fördernden Fluids bzw. des Prozessfluids gekühlt, insbesondere die als Magnetlager ausgebildeten Lager. Bevorzugt ist die Fluidenergiemaschine außerdem so ausgebildet, dass das Prozessfluid den Rotor zumindest teilweise umspült.

Damit der Motor in der Lage ist, laterale Kräfte zur Stabilisierung der Konzentrizität des Rotors zu dem Spaltrohr auszuüben, ist es zweckmäßig, wenn der Motor mindestens zwei Wicklungssysteme unterschiedlicher Polpaarzahl aufweist.

Außerdem ist es zweckmäßig, wenn die Regelung mit Lage- und/oder Schwingungssensoren in Verbindung steht und deren Signale als Eingangssignale zur Ansteuerung des Motors verwendet. Diese Sensoren können ebenso für die Regelung von radialen Magnetlagern benutzt werden, so dass keine zusätzlichen Bauteile erforderlich sind. Zusätzlich oder alternativ kann die Regelung mit Messungen der elektrischen Ströme durch die Motorwicklungen oder mit Messungen der magnetischen Flüsse am Motor in Verbindung stehen und diese als Eingangssignal zur Ansteuerung des Motors zur Ausübung von Lateralkräften auf den Rotor verwenden.

Die Vorteile der Erfindung kommen besonders zum Tragen, wenn es sich um einen mehrstufigen Verdichter oder eine mehrstufige Pumpe mit einer der Stufenzahl entsprechenden Anzahl von Laufrädern handelt.

Für bevorzugt kurz bauende Anordnung kann die Lagerung der Welle mittels zweier gesonderter radialer Lager erfolgen, die an den Wellenenden angeordnet sind und die Kombination von Motor und Verdichter zwischen sich einschließen.

Es ist hinsichtlich der Rotordynamik besonders zweckmäßig, wenn der Motor und/oder die Laufräder entlang einer Wellenlängsachse angeordnet sind und entlang dieser Wellenlängsachse beidseitig des Motors jeweils ein Radiallager vorgesehen ist und auf der von dem Motor abgewendeten Seite des Laufrads oder der Laufräder ein weiteres Radiallager vorgesehen ist. Diese drei gesonderte radiale Lager umfassende Anordnung ist für eine gute Rotordynamik bei mehrstufigen Verdichtern hervorragend geeignet.

In Verbindung mit der erfindungsgemäßen Regelung, die den Motor derart ansteuert, dass neben Drehmomenten zum Antrieb der Fluidenergiemaschine auch zur Wellenlängsachse radiale Kräfte ausgeübt werden, weist eine derartige Anordnung auch in extremen Betriebsbereichen eine hohe Verfügbarkeit auf.

Die Erfindung betrifft außerdem ein Verfahren zum Betrieb einer Fluidenergiemaschine der vorgenannten Art, bei dem mittels einer Regelung der Ansteuerung des Motors zur Steuerung eines Antriebsdrehmoments eine zusätzliche Ansteuerung zur Erzeugung zu einer Wellenlängsachse radialer Kräfte überlagert wird, wobei neben dem Motor mindestens zwei weitere Radiallager vorgesehen sind.

Im Folgenden ist die Erfindung anhand der Beschreibung eines speziellen Ausführungsbeispiels unter Bezugnahme auf eine Figur näher erläutert. Für den Fachmann ergeben sich aus dem Offenbarten weitere Gestaltungsmöglichkeiten, die der Erfindung zuzurechnen sind und sich von dem beschriebenen Ausführungsbeispiel unterscheiden. Es zeigt:

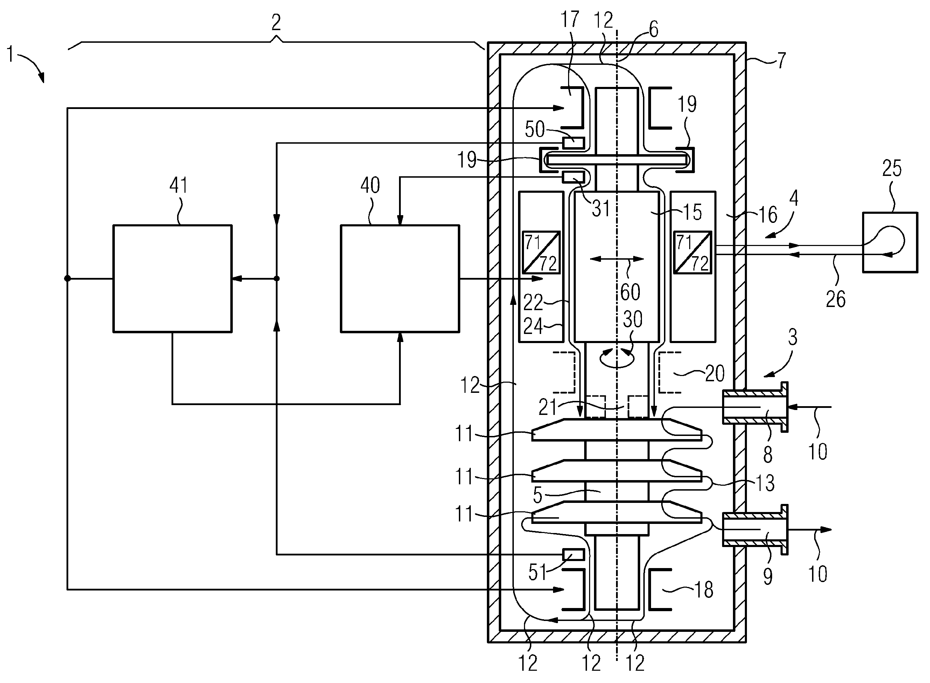

- Figur 1: eine schematische Darstellung eines Längsschnitts durch eine erfindungsgemäße Fluidenergiemaschine mit Bestandteilen einer erfindungsgemäßen Regelung, die mittels Blocksymbolen vereinfacht gezeigt ist.

Die Figur zeigt eine Fluidenergiemaschine 1 in einem Längsschnitt und eine Regelung 2 als Blockschaltbild jeweils in vereinfachter Darstellung. Die Fluidenergiemaschine 1 weist einen Verdichter 3 und einen Motor 4 auf, die verbunden mittels einer gemeinsamen Welle 5 entlang einer Wellenlängsachse 6 in einem nach außen gasdichten Gehäuse 7 angeordnet sind. Das gasdichte Gehäuse 7 ist insofern gasdicht, als das keine Durchführung für die Welle 5 vorgesehen ist, die mittels einer Wellendichtung abgedichtet werden müsste. Insofern kann die Fluidenergiemaschine 1 als dichtungslos beschrieben werden, wenngleich sich zwischen den einzelnen Stufen des Verdichters (3) Wellendichtungen befinden zum Abbau der in den Stufen erzeugten Druckdifferenz.

Das Gehäuse 7 weist einen Einlass 8 und einen Auslass 9 für Prozessfluid 10 auf, welches mittels des Verdichters 3 verdichtet wird. Neben einer Hauptströmung 13 durch den Einlass 8 und den Auslass 9 bzw. mehrere Laufräder 11 des Verdichters 3 strömt ein kleinerer Teil des Prozessfluids 10 von dem letzten Laufrad 11 entlang eines Sekundärströmungspfades 12 bis zu dem ersten Laufrad 11.

Der Motor 4 weist einen Rotor 15 und einen Stator 16 auf, wobei der Rotor 15 von der Welle 5 getragen wird. Die Welle 5 ist in einem ersten Radiallager 17 und einem zweiten Radiallager 18 sowie einem Axiallager 19 gelagert. In der Figur ist ein drittes Radiallager 20 gestrichelt dargestellt, dass optional vorgesehen werden kann. In diesem Teil kann die Welle 5 in dem Bereich zwischen dem Verdichter 3 und dem Motor 4 auch mittels eines Quill-shaft 21 (gestrichelt dargestellt) biegeschlaff ausgebildet werden.

Der Verdichter 3 ist mit drei Laufrädern 11 dementsprechend dreistufig ausgebildet, kann aber auch weniger oder weitere Stufen aufweisen.

Die Lager 17, 18, 19 und 20 sind als Magnetlager ausgeführt und der Sekundärströmungspfad 12 erstreckt sich entlang dieser Lager zum Zwecke deren Kühlung. Das Prozessfluid 10 entlang des Sekundärströmungspfads 12 kühlt nicht nur die Magnetlager 17 - 20, sondern auch den Rotor 15 des Motors 4. Der Stator 16 ist von dem Rotor 15 durch einen Spalt 22 getrennt, wobei der Sekundärströmungspfad 12 sich durch den Spalt 22 erstreckt. Damit das Innere des Stators 16 nicht dem Prozessfluid 10 ausgesetzt wird, ist dieser gekapselt und zum Spalt 22 mit einem sogenannten Spaltrohr 24 hin abgegrenzt. Der Stator 16 ist mittels einer separaten Statorkühlung 25 gekühlt. Das in der Statorkühlung zirkulierende Kühlungsfluid 26 kann unter einem anderen Druck stehen als das in dem Spalt vorhandenen Prozessfluid 10, welchen Differenzdruck das Spaltrohr 24 aufnimmt.

Der Motor 4 überträgt auf den Verdichter 3 ein Drehmoment 30 zum Antrieb der Verdichtung. Die Regelung 2 regelt hierbei die Drehzahl der Fluidenergiemaschine 1, wobei ein Drehzahlsensor 31 die Drehzahl an der Welle 5 misst und den Messwert an einen Inverter 40 der Regelung 2 weiterleitet. Der Inverter 40 versorgt den Stator 16 mit der für den Sollwert der Drehzahl entsprechenden Ansteuerung bzw. einen Strom der erforderlichen Spannung und Frequenz. Ein kombinierter Regler und Verstärker 41 der Regelung 2 gibt dem Inverter 40 die entsprechenden Sollwerte für die Drehzahl vor. Der kombinierte Regler und Verstärker 41 steht darüber hinaus mit zwei Lagesensoren, einem ersten radialen Lagersensor 50 und einem zweiten radialen Lagesensor 51, in Verbindung, deren Messwerte der kombinierte Regler und Verstärker 41 nutzt, das erste Radiallager 17 und das zweite Radiallager 18 entsprechend anzusteuern, so dass die Welle 5 in ihrer räumlichen Solllage bleibt. Daneben nutzt der kombinierte Regler und Verstärker 41 die Signale der radialen Lagesensoren 50, 51, um dem Inverter 40 zu einer über der Ansteuerung zum Antrieb des Verdichters überlagerten Ansteuerung des Stators 16 des Motors 4 zu veranlassen, welche eine Abweichung der konzentrischen Lage der Welle 5 zu dem Spaltrohr 24, welche Ansteuerung in zusätzlichen radialen Kräften 60 auf die Welle 5 resultiert.

Damit der Motor 4 in der Lage ist, die zusätzlichen radialen Kräfte 60 zu erzeugen, ist in dem Stator 16 ein erstes Wicklungssystem 71 und eine zweites Wicklungssystem 72 vorgesehen, welche Wicklungssysteme 71, 72 eine unterschiedliche Polpartzahl aufweisen.

## Patentansprüche

1. Fluidenergiemaschine (1), insbesondere Verdichter (3) oder Pumpe, mit einem Gehäuse (7), einem Motor (4), mindestens einem Laufrad (11), mindestens zwei radialen Lagern (17, 18), mindestens einer sich entlang einer Wellenlängsachse (6) erstreckenden Welle (5), die das mindestens eine Laufrad (11) und einen Rotor (15) des Motors (4) trägt, wobei die Welle (5) in den radialen Lagern (17, 18) gelagert ist, wobei der Motor (4) einen den Rotor (15) im Bereich des Motors (4) zumindest teilweise umgebenden Stator (16) aufweist und zwischen dem Rotor (15) und dem Stator (16) sowie zwischen der Welle (5) und den radialen Lagern (17, 18) ein sich in Umfangsrichtung und entlang der Wellenlängsachse (6) erstreckender Spalt (22) ausgebildet ist, der mit einem Fluid zumindest teilweise gefüllt ist,
**dadurch gekennzeichnet, dass**
der Motor (4) auch als Lager ausgebildet ist, und mit einer Regelung (2) in Verbindung steht, die den Motor (4) derart ansteuert, dass neben Drehmomenten (30) zum Antrieb der Fluidenergiemaschine (1) auch zu der Wellenlängsachse (6) radiale Kräfte (60) ausübbar sind.

2. Fluidenergiemaschine (1) nach Anspruch 1,
wobei das Gehäuse (7) gasdicht ausgebildet ist.

3. Fluidenergiemaschine (1) nach Anspruch 1 oder 2,
wobei mindestens ein Axiallager (19) zur Lagerung der Welle (5) vorgesehen ist.

4. Fluidenergiemaschine (1) nach einem der vorhergehenden Ansprüche,
wobei die Fluidenergiemaschine (1) derart ausgebildet ist, dass ein Prozessfluid (10), welches von der Fluidenergiemaschine (1) gefördert wird, den Rotor (15) zumindest teilweise umspült.

5. Fluidenergiemaschine (1) nach einem der vorhergehenden Ansprüche,
wobei ein Spaltrohr (24) in einem Spalt (22) zwischen dem Rotor (15) und dem Stator (16) vorgesehen ist, so dass Fluide, die den Rotor (15) umspülen, nicht auf die Seite des Spaltrohrs (24) gelangen, auf der sich der Stator (16) befindet

6. Fluidenergiemaschine (1) nach einem der vorhergehenden Ansprüche,
wobei die Radiallager (17, 18, 20) als Magnetlager ausgebildet sind.

7. Fluidenergiemaschine (1) nach dem vorhergehenden Anspruch 3,
wobei das Axiallager (19) als Magnetlager ausgebildet ist.

8. Fluidenergiemaschine (1) nach Anspruch 4, 5 oder 6,
wobei die Fluidenergiemaschine (1) derart ausgebildet ist, dass mindestens ein Magnetlager mittels des Prozessfluids (10) gekühlt ist.

9. Fluidenergiemaschine (1) nach einem der vorhergehenden Ansprüche,
wobei der Motor (4) mit mindestens zwei Wicklungssystemen (71, 72) unterschiedlicher Polpaarzahl ausgestattet ist.

10. Fluidenergiemaschine (1) nach einem der vorhergehenden Ansprüche,
wobei die Regelung (2) mit Lagesensoren (50, 51) und/oder Schwingungssensoren in Verbindung steht und deren Signale als Eingangssignale zur Ansteuerung des Motors (4) verwendet.

11. Fluidenergiemaschine (1) nach einem der vorhergehenden Ansprüche,
wobei die Regelung mit Messungen der elektrischen Ströme durch mindestens eine Motorwicklung oder mit Messungen der magnetischen Flüsse am Motor (4) in Verbindung steht und derart ausgebildet ist, dass diese Messungen als Eingangssignal zur Ansteuerung des Motors (4) verwendet werden.

12. Verfahren zum Betrieb einer Fluidenergiemaschine (1) nach einem der vorhergehenden Ansprüche 1 bis 11,
wobei die Regelung (2) mit zwei Lagesensoren (50, 51) und/oder Schwingungssensoren für die Welle (5) in Verbindung steht und deren Signale als Eingangssignale zur Ansteuerung des Motors (4) zur Erzeugung zur Wellenachse radialer Kräfte verwendet werden und die Regelung mit zwei als Magnetlager ausgebildeten radialen Lagern (17, 18, 20) in Verbindung steht und die Signale als Eingangssignale zur Ansteuerung der radialen Lager verwendet.

13. Verfahren nach Anspruch 12,
wobei die Regelung mit Messungen der elektrischen Ströme durch eine Motorwicklung oder mit Messungen der magnetischen Flüsse am Motor (4) in Verbindung steht und diese als Eingangssignal zur Ansteuerung des Motors (4) verwendet.

## Claims

1. Fluid energy machine (1), in particular a compressor (3) or pump, having a housing (7), a motor (4), at least one impeller (11), at least two radial bearings (17, 18), at least one shaft (5) which extends along a shaft longitudinal axis (6) and supports the at least one impeller (11) and a rotor (15) of the motor (4), wherein the shaft (5) is borne in the radial bearings (17, 18), wherein the motor (4) has a stator (16) which at least partially surrounds the rotor (15) in the area of the motor (4), and a gap (22) which extends in the circumferential direction and along the shaft longitudinal axis (6) and is at least partially filled with a fluid is formed between the rotor (15) and the stator (16), as well as between the shaft (5) and the radial bearings (17, 18), **characterized in that** the motor (4) is also in the form of a bearing and is connected to a closed-loop control system (2) which drives the motor (4) such that radial forces (60) with respect to the shaft longitudinal axis (6) can also be exerted, in addition to torques (30) for driving the fluid energy machine (1).

2. Fluid energy machine (1) according to Claim 1,
wherein the housing (7) is designed to be gas-tight.

3. Fluid energy machine (1) according to Claim 1 or 2,
wherein at least one axial bearing (19) is provided for bearing the shaft (5).

4. Fluid energy machine (1) according to one of the preceding claims,
wherein the fluid energy machine (1) is designed such that a process fluid (10), which is fed by the fluid energy machine (1), at least partially flows around the rotor (15).

5. Fluid energy machine (1) according to one of the preceding claims,
wherein a split cage (24) is provided in a gap (22) between the rotor (15) and the stator (16), such that fluids which flow around the rotor (15) do not reach that side of the split cage (24) on which the stator (16) is located.

6. Fluid energy machine (1) according to one of the preceding claims,
wherein the radial bearings (17, 18, 20) are in the form of magnetic bearings.

7. Fluid energy machine (1) according to the preceding Claim 3,
wherein the axial bearing (19) is in the form of a magnetic bearing.

8. Fluid energy machine (1) according to Claim 4, 5 or 6,
wherein the fluid energy machine (1) is designed such that at least one magnetic bearing is cooled by means of the process fluid (10).

9. Fluid energy machine (1) according to one of the preceding claims,
wherein the motor (4) is equipped with at least two winding systems (71, 72) with different numbers of pole pairs.

10. Fluid energy machine (1) according to one of the preceding claims,
wherein the closed-loop control system (2) is connected to position sensors (50, 51) and/or oscillation sensors, and uses their signals as input signals to drive the motor (4).

11. Fluid energy machine (1) according to one of the preceding claims,
wherein the closed-loop control system is linked to measurements of the electrical currents through at least one motor winding or to measurements of the magnetic fluxes on the motor (4), and is designed such that these measurements are used as an input signal for driving the motor (4).

12. Method for operation of a fluid energy machine (1) according to one of the preceding Claims 1 to 11,
wherein the closed-loop control system (2) is connected to two position sensors (50, 51) and/or oscillation sensors for the shaft (5), and their signals are used as input signals for driving the motor (4) in order to produce radial forces with respect to the shaft axis, and the closed-loop control system is connected to two radial bearings (17, 18, 20) which are in the form of magnetic bearings, and uses the signals as input signals for driving the radial bearings.

13. Method according to Claim 12,
wherein the closed-loop control system is linked to measurements of the electrical currents through a motor winding or to measurements of the magnetic fluxes on the motor (4), and uses these as an input signal for driving the motor (4).

## Revendications

1. Machine ( 1 ) à énergie fluidique, notamment compresseur ( 3 ) ou pompe ayant une enveloppe ( 7 ), un moteur ( 4 ), au moins une roue ( 11 ), au moins deux paliers ( 17, 18 ) radiaux, au moins un arbre ( 5 ) s'étendant suivant un axe ( 6 ) longitudinal d'arbre qui porte au moins une roue ( 11 ) et un rotor ( 15 ) du moteur ( 4 ), l'arbre ( 5 ) étant monté dans les paliers ( 17, 18 ) radiaux, le moteur ( 4 ) ayant un stator ( 16 ) entourant au moins en partie le rotor ( 15 ) dans la zone du moteur ( 4 ) et il est formé entre le rotor ( 15 ) et le stator ( 16 ) ainsi qu'entre l'arbre ( 5 ) et les paliers ( 17, 18 ) radiaux et un intervalle ( 22 ) s'étendant dans la direction périphérique le long de l'axe ( 6 ) longitudinal de l'arbre, intervalle qui est empli au moins en partie d'un fluide,
**caractérisé en ce que**
le moteur ( 4 ) est constitué aussi en palier et est en liaison avec une régulation ( 2 ) qui excite le moteur ( 4 ) de manière à pouvoir appliquer, outre des couples ( 30 ) de rotation pour l'entraînement de la machine ( 1 ) à énergie fluidique, également des forces ( 60 ) radiales à l'axe ( 6 ) longitudinal de l'arbre.

2. Machine ( 1 ) à énergie fluidique suivant la revendication 1, dans laquelle l'enveloppe ( 7 ) est étanche au gaz.

3. Machine ( 1 ) à énergie fluidique suivant la revendication 1 ou 2,
dans laquelle il est prévu, au moins, un palier ( 19 ) axial pour le montage de l'arbre ( 5 ).

4. Machine ( 1 ) à énergie fluidique suivant l'une des revendications précédentes,
dans laquelle la machine ( 1 ) à énergie fluidique est constituée de manière à ce qu'un fluide ( 10 ) de processus, qui est véhiculé par la machine ( 1 ) à énergie fluidique, nettoie le rotor ( 15 ) au moins en partie.

5. Machine ( 1 ) à énergie fluidique suivant l'une des revendications précédentes,
dans laquelle il est prévu un tuyau ( 24 ) d'intervalle dans un intervalle ( 22 ) entre le rotor ( 15 ) et le stator ( 16 ) de manière à ce que des fluides qui nettoient le rotor ( 15 ) n'arrivent pas du côté du tuyau ( 14 ) d'intervalle où se trouve le stator ( 16 ).

6. Machine ( 1 ) à énergie fluidique suivant l'une des revendications précédentes,
dans laquelle les paliers ( 17, 18, 20 ) radiaux sont sous la forme de paliers magnétiques.

7. Machine ( 1 ) à énergie fluidique suivant la revendication précédente 3,
dans laquelle le palier ( 19 ) axial est constitué sous la forme d'un palier magnétique.

8. Machine ( 1 ) à énergie fluidique suivant la revendication 4, 5 ou 6,
dans laquelle la machine ( 1 ) à énergie fluidique est constituée de manière à refroidir au moins un palier magnétique au moyen du fluide ( 10 ) de processus.

9. Machine ( 1 ) à énergie fluidique suivant l'une des revendications précédentes,
dans laquelle le moteur ( 4 ) est équipé d'au moins deux systèmes ( 71, 72 ) d'enroulement ayant un nombre de paires de pôles différent.

10. Machine ( 1 ) à énergie fluidique suivant l'une des revendications précédentes,
dans laquelle la régulation ( 2 ) est en liaison avec des sondes ( 50, 51 ) de position et/ou des sondes de vibration et utilise leurs signaux comme signaux d'entrée pour exciter le moteur ( 4 ).

11. Machine ( 1 ) à énergie fluidique suivant l'une des revendications précédentes,
dans laquelle la régulation est en liaison avec des mesures des courants électriques passant dans au moins un enroulement du moteur ou avec des mesures des flux magnétiques du moteur ( 4 ) et est constituée de manière à utiliser ces mesures comme signal d'entrée pour l'excitation du moteur ( 4 ).

12. Procédé pour faire fonctionner une machine ( 1 ) à énergie fluidique, suivant l'une quelconque des revendications précédentes 1 à 11,
dans lequel la régulation ( 2 ) est en liaison avec deux sondes ( 50, 51 ) de position et/ou sondes de vibration de l'arbre ( 5 ) et leurs signaux sont utilisés comme signaux d'entrée pour l'excitation du moteur ( 4 ) pour la production de forces radiales par rapport à l'axe de l'arbre, et la régulation est en liaison avec deux paliers ( 17, 18, 20 ) radiaux constitués en paliers magnétiques et utilise les signaux comme signaux d'entrée pour commander les paliers radiaux.

13. Procédé suivant la revendication 12,
dans lequel la régulation est en liaison avec des mesures des courants électriques passant dans un enroulement du moteur ou avec des mesures des flux magnétiques du moteur ( 4 ) et les utilise comme signal d'entrée pour exciter le moteur ( 4 ).
